# DEMANDE DE BREVET EUROPEEN

(11) **EP 1 798 974 A1**
(43) Date de publication de la demande: **20.06.2007**
(21) Numéro de dépôt: 05292700.1
(22) Date de dépôt: 15.12.2005
(51) Int. Cl.: H04N 7/167

(54) **Procédé de transmission d'un contenu à accès conditionnel**

(71) Demandeur: Nagra France Sarl, 75015 Paris (FR)
(72) Inventeur: Lelegard, Thierry, 75015 Paris (FR)
(74) Mandataire: Nithardt, Joel

(57) **Abrégé**

La présente invention concerne un procédé de transmission d'un contenu à accès conditionnel, dans lequel ledit contenu est diffusé sous forme de paquets de données (DP). Ces paquets de données contiennent au moins un marqueur ayant une valeur connue et une partie utile (PL). Le procédé comporte les étapes suivantes :
- extraction dudit marqueur (Mc) à partir du paquet de données (DP) et remplacement de ce marqueur par une information d'identification (PAR) d'une clé de chiffrement;
- chiffrement de ladite partie utile (PL) par une clé de chiffrement (K1) identifiable par ladite information d'identification (PAR) d'une clé de chiffrement;
- formation d'un paquet de données chiffrées contenant au moins ladite information d'identification (PAR) d'une clé de chiffrement et la partie utile chiffrée (PLK1);
- transmission dudit paquet de données chiffrées à au moins un récepteur.

## Description

### DOMAINE TECHNIQUE

La présente invention concerne un procédé de transmission d'un contenu à accès conditionnel depuis un fournisseur de contenu, ce contenu étant envoyé à au moins un récepteur sous la forme de paquets de données.

Elle concerne également un procédé de traitement d'un contenu à accès conditionnel, dans lequel ledit contenu est diffusé sous forme de paquets de données chiffrées.

Ces procédés s'appliquent notamment à la télévision à péage, mais également à d'autres configurations dans lesquelles des données sont envoyées sous forme chiffrée. Ces données pourraient notamment concerner des transactions financières, des logiciels, des jeux ou un contenu musical par exemple ou des informations telles que des informations boursières, des prévisions météorologiques ou similaires.

### TECHNIQUE ANTERIEURE

Dans un certain nombre d'applications, en particulier dans le domaine de la télévision à péage, des données formant un contenu sont envoyées sous la forme de paquets de données. Ces paquets peuvent en particulier avoir une longueur fixe prédéfinie. Ils sont généralement diffusés sous forme chiffrée à destination d'un ensemble de récepteurs tel que des décodeurs.

En parallèle aux paquets de données, des informations de déchiffrement sont également diffusées ou transmises d'une autre manière. Ces informations contiennent en particulier des clés de déchiffrement ou des données permettant de déterminer les clés nécessaires. Afin de garantir une certaine sécurité des systèmes de données à accès conditionnel, il est impératif que les clés soient changées après un certain temps d'utilisation ou de validité. En pratique, dans le cas particulier de la télévision à péage, une clé pourrait être utilisée pour accéder à quelques secondes, voire quelques minutes d'un contenu télévisuel. L'une des contraintes liées au changement de clé est la nécessité d'associer la bonne clé de déchiffrement à chaque paquet de données, faute de quoi ces données ne sont pas accessibles. Il est toutefois pratiquement impossible de synchroniser les données avec les informations de déchiffrement, en particulier à cause du fonctionnement interne des systèmes. En outre, dans certaines applications, les clés peuvent être transmises sous la forme d'un fichier de clés de façon totalement indépendante du contenu.

Pour ces raisons, il est nécessaire de disposer d'un mécanisme qui permette d'associer chaque paquet de données à la clé de déchiffrement correspondante, sans pouvoir synchroniser ces deux éléments.

Selon une forme de réalisation connue, les paquets de données contiennent généralement un marqueur de valeur connue qui permet au récepteur/décodeur de repérer le début d'un paquet et de traiter ce paquet en conséquence.

Selon les normes utilisées pour le formatage de ces paquets, la longueur d'un paquet est fixe et il n'est pas possible d'ajouter des informations supplémentaires à celles qui sont déjà existantes. Cela signifie en particulier que lorsque la clé de chiffrement d'un paquet est modifiée, il n'est pas prévu d'indiquer ce changement de clé dans le paquet, par exemple au moyen d'informations de changement de clé. Il est à noter que le changement des clés n'est pas synchronisé avec les paquets, de sorte qu'une clé peut généralement servir à chiffrer et à déchiffrer plusieurs paquets.

Dans les systèmes existants, à réception d'un paquet, on déchiffre celui-ci avec la clé courante. On vérifie ensuite si le résultat du déchiffrement est utilisable, c'est-à-dire s'il contient le marqueur. Si tel n'est pas le cas, on déchiffre le même paquet avec la clé suivante. Si le résultat de ce déchiffrement est utilisable et contient donc le marqueur, la nouvelle clé est utilisée pour le déchiffrement. Si le résultat de ce déchiffrement ne contient pas le marqueur, on génère un message d'erreur.

Ce mode de réalisation présente un inconvénient important. En effet, il arrive que le déchiffrement d'un paquet avec la clé courante donne un résultat contenant bel et bien le marqueur, alors que ce paquet a été chiffré avec une autre clé que la clé courante. Ce résultat dû au hasard se produit selon une fréquence non négligeable et empêche un utilisateur d'accéder au contenu même s'il en a les droits.

La présente invention se propose de pallier cet inconvénient en réalisant un procédé dans lequel le changement de clé est indiqué, de sorte que les paquets seront déchiffrés avec la clé avec laquelle ils ont été chiffrés, sans confusion possible entre deux clés. Ainsi, l'accès au contenu est toujours assuré.

### EXPOSE DE L'INVENTION

Le but de l'invention est atteint par un procédé de transmission d'un contenu à accès conditionnel, dans lequel ledit contenu est diffusé sous forme de paquets de données, ces paquets de données contenant une partie utile et au moins un marqueur ayant une valeur connue, ce procédé comportant les étapes suivantes :
- extraction dudit marqueur à partir du paquet de données et remplacement de ce marqueur par une information d'identification d'une clé de chiffrement;
- chiffrement de ladite partie utile par une clé de chiffrement identifiable par ladite information d'identification d'une clé de chiffrement;
- formation d'un paquet de données chiffrées contenant au moins ladite information d'identification d'une clé de chiffrement et la partie utile chiffrée;
- transmission dudit paquet de données chiffrées à au moins un récepteur.

Le but de l'invention est également atteint par un procédé de traitement d'un contenu à accès conditionnel, dans lequel ledit contenu est diffusé sous forme de paquets de données chiffrées, ce procédé comportant les étapes suivantes :
- réception d'un paquet de données chiffrées contenant une partie utile chiffrée et au moins une information d'identification d'une clé de chiffrement;
- extraction de ladite information d'identification d'une clé de chiffrement dudit paquet de données;
- détermination d'une clé à utiliser pour le déchiffrement de ladite partie utile chiffrée, au moyen de l'information d'identification d'une clé de chiffrement;
- déchiffrement au moyen de la clé à utiliser, de ladite partie utile chiffrée;
- formation d'un paquet de données en remplaçant, dans le paquet de données chiffrées, la partie utile chiffrée par la partie utile et l'information d'identification d'une clé de chiffrement par un marqueur de valeur connue;
- traitement dudit paquet de données.

Dans un système de télévision à péage utilisant le procédé de l'invention, les paquets de données peuvent être diffusés à destination d'un groupe de récepteurs, envoyés sous forme point à point ou être stockés sur un support physique tel qu'un disque dur par exemple. Les informations de déchiffrement peuvent également être diffusées, envoyées point à point ou stockées. De façon très générale, les contenus à accès conditionnel et les moyens pour y accéder peuvent être transmis de façon totalement indépendantes, éventuellement par des voies de communication différentes.

Généralement, le dispositif de déchiffrement à l'intérieur du récepteur ou du décodeur dispose simultanément de deux informations de déchiffrement ou clés. Dans le cas où plus de deux clés sont mémorisées dans une mémoire du décodeur, elles sont transmises au dispositif de déchiffrement de telle sorte qu'il ne dispose également que de deux informations à la fois, les autres restant mémorisées pour un usage ultérieur. Si ces informations sont les clés de déchiffrement, il dispose en générale de la clé actuelle et de la clé suivante, c'est-à-dire de la clé ayant servi à chiffrer le paquet en cours de visualisation et de la clé ayant servi à chiffrer le prochain paquet utilisant une clé différente de la clé actuelle.

Selon une variante, les informations de déchiffrement ou les clés peuvent être mémorisées sous forme d'une liste, du type liste à biffer par exemple ou sous forme d'un fichier contenant un index associé aux clés, permettant de trouver la clé à utiliser.

Bien que le paquet de données, par sa structure et les contraintes liées à la norme utilisée ne permette pas d'inclure des informations de changement de clé, le procédé de l'invention permet de déterminer pour quel paquet la clé suivante doit être utilisée.

En effet, dans l'invention, comme on ne peut pas ajouter des informations supplémentaires par rapport au contenu d'un paquet de données, on remplace des informations existantes par d'autres informations relatives au changement de clés. Cela implique que des informations peuvent être supprimées sans porter préjudice au fonctionnement normal du système, en particulier sans empêcher l'accès au contenu.

Ceci est possible grâce à la présence du marqueur. En effet, comme on connaît la valeur de ce marqueur en clair, il est possible de le supprimer avant le chiffrement, dans un centre de gestion, puis de l'ajouter après déchiffrement, du côté de l'utilisateur. La suppression de ce marqueur laisse de la place disponible pour insérer des informations relatives aux changements de clés.

Dans cette invention, malgré l'impossibilité d'augmenter la taille d'un paquet de données, on peut ajouter des informations supplémentaires qui permettent une gestion idéale des changements de clés et qui assure donc un accès au contenu chiffré.

### DESCRIPTION SOMMAIRE DES DESSINS

La présente invention et ses avantages seront mieux compris en référence aux figures annexées et à la description détaillée d'un mode de réalisation particulier, dans lesquelles :
- la figure 1 illustre schématiquement le chiffrement d'un paquet de données selon le procédé de l'invention; et
- la figure 2 illustre schématiquement le déchiffrement du paquet de données de la figure 1.

### MEILLEURE MANIERE DE REALISER L'INVENTION

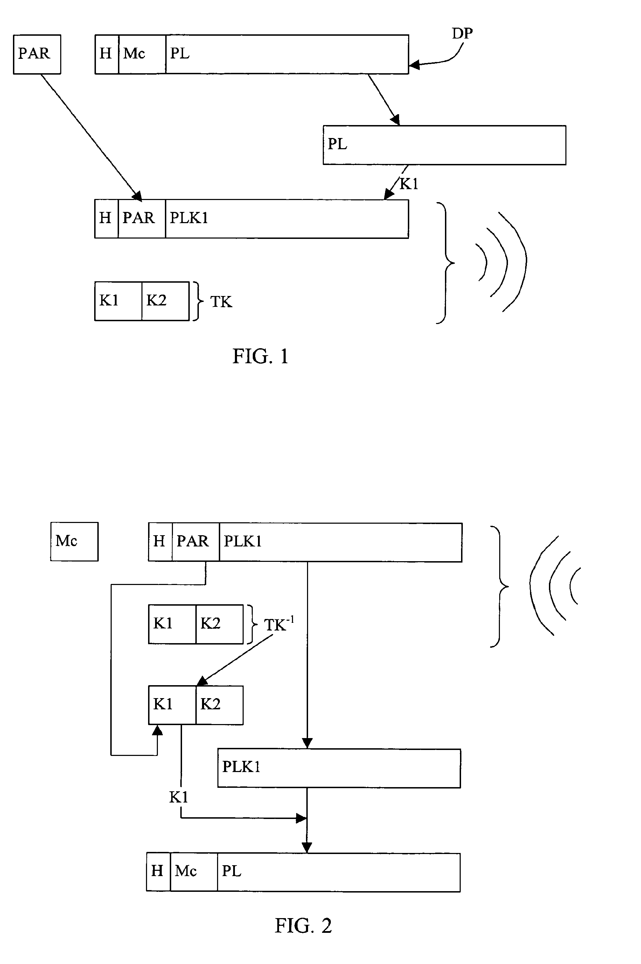

En référence à la figure 1, le contenu diffusé est transmis sous la forme de paquets de données DP. Chaque paquet de données est formé d'un en-tête H en clair, d'un marqueur Mc et d'une partie utile PL. L'en-tête H contient des informations de service ainsi qu'un indicateur de début de paquet. Selon un mode de réalisation concret, il est formé de quatre octets et reste toujours en clair. Le marqueur Mc est constant dans tous les paquets. En pratique, il est généralement formé de trois octets dont les deux premiers ont la valeur 0 et le troisième la valeur 1. La partie utile PL est formée des données à accès conditionnel proprement dites c'est-à-dire des données audio ou vidéo par exemple dans le cas de la diffusion de contenus de télévision à péage ou de musique. La taille du paquet de données DP complet est fixe et ne doit pas être modifiée. En pratique, elle peut par exemple être de 188 octets.

En appliquant le procédé de l'invention pour le chiffrement, dans un premier temps, on décompose le paquet de données DP, en ses composants, à savoir l'en-tête H, le marqueur Mc et la partie utile PL.

La partie utile PL contenue dans le paquet de données est chiffrée au moyen d'une première clé de chiffrement K1, en utilisant par exemple un algorithme de chiffrement par blocs, de façon à obtenir la partie utile chiffrée PLK1.

Un nouveau paquet de données chiffrées est formé en associant l'en-tête H, des informations d'identification PAR d'une clé de chiffrement et la partie utile chiffrée PLK1. Ces informations d'identification PAR permettent d'identifier la clé nécessaire pour déchiffrer la partie utile chiffrée.

Selon un premier mode de réalisation, le récepteur ou décodeur dispose toujours de deux clés. L'une d'elles est marquée comme ayant une parité paire et l'autre, une parité impaire. Dans ce cas, les informations d'identification PAR indiquent simplement si la clé à utiliser est paire ou impaire.

Il est à noter que la longueur totale d'un paquet de données doit rester constante pendant tout le procédé. Comme les informations de parité remplacent le marqueur, ces informations doivent avoir la même taille, qui peut par exemple être de trois octets. La parité pouvant être notée sur un seul bit, les autres bits peuvent être mis à une valeur quelconque, par exemple tous à 1 ou tous à 0 de façon à atteindre la taille requise.

Selon un deuxième mode de réalisation, dans lequel le décodeur dispose de plus de deux clés, la parité de la clé n'est pas utilisable. Si les clés sont mémorisées sous la forme d'une liste, l'information d'identification PAR d'une clé de chiffrement peut être un numéro de cette liste.

Selon un troisième mode de réalisation, les clés sont disponibles sous la forme d'un fichier indexé. Dans ce cas, les informations d'identification PAR d'une clé de chiffrement correspondent à un numéro d'index de ce fichier.

Dans ces modes de réalisation, les clés utilisées peuvent être de type symétrique ou asymétrique. Dans le cas d'une clé symétrique, la même clé est utilisée pour le chiffrement des données et pour leur déchiffrement. Dans le cas d'une clé asymétrique, la clé utilisée pour chiffrer des données est différente de la clé permettant de les déchiffrer. Ceci ne pose pas de problèmes particuliers puisque les clés pour le déchiffrement sont soit envoyées depuis le centre de gestion, soit connues du décodeur. Dans la présente description, en cas d'utilisation de clés asymétriques, le terme "la clé" représente en fait une paire de clés, l'une des clés de la paire étant utilisée pour le chiffrement et l'autre clé de cette paire pour le déchiffrement.

Selon le mode de réalisation illustré par la figure 1, deux clés consécutives sont chiffrées au moyen d'une clé de transmission TK et sont envoyées sous la forme d'un message de contrôle ECM à destination des récepteurs concernés. Ces clés sont associées chacune à une parité différente, de sorte qu'au moment du déchiffrement, l'informations d'identification PAR d'une clé de chiffrement permet de déterminer laquelle de ces deux clés doit être utilisée.

Selon un autre mode de réalisation, les clés peuvent également être mises à disposition des récepteurs concernés par d'autres moyens, par exemple envoyés sur un support physique indépendamment de l'envoi des paquets de données.

Les paquets de données chiffrées sont diffusés à destination des récepteurs concernés de façon conventionnelle.

La figure 2 illustre le déchiffrement des données reçues suite au chiffrement tel qu'indiqué ci-dessus.

Prenons l'hypothèse où deux clés de chiffrement K1 et K2 ont été envoyées sous la forme de messages de contrôle ECM au récepteur. Ce message de contrôle est tout d'abord traité de manière à en extraire les deux clés de chiffrement K1 et K2 au moyen de la clé de transmission TK.

Parallèlement à ceci, le paquet de données chiffrées est scindé en ses composants, de façon à en extraire la partie utile chiffrée PLK1.

Les informations d'identification PAR provenant du paquet de données chiffrées sont également lues, de façon à déterminer quelle est la clé K1 ou K2 qui a été utilisée pour le chiffrement de la partie utile chiffrée PLK1.

Lorsque l'identité de la clé de chiffrement K1 ou K2 est connue, on applique cette clé à la partie utile chiffrée PLK1, de façon à obtenir la partie utile PL en clair.

Le paquet de données DP est reconstitué en remplaçant les informations d'identification PAR d'une clé de chiffrement par le marqueur Mc, et en remplaçant la partie utile chiffrée PLK1 par la partie utile PL en clair. On obtient ainsi un paquet de données conforme au format attendu par le récepteur. Le marqueur étant toujours identique et ayant un format et une valeur reconnaissable pour un traitement postérieur, le paquet de données peut ensuite être traité de façon conventionnelle. La valeur du marqueur étant constante, elle peut être simplement mémorisée dans une mémoire du décodeur.

## Revendications

1. Procédé de transmission d'un contenu à accès conditionnel, dans lequel ledit contenu est diffusé sous forme de paquets de données (DP), ces paquets de données contenant au moins un marqueur ayant une valeur connue et une partie utile (PL), ce procédé comportant les étapes suivantes :
- extraction dudit marqueur (Mc) à partir du paquet de données (DP) et remplacement de ce marqueur par une information d'identification (PAR) d'une clé de chiffrement;
- chiffrement de ladite partie utile (PL) par une clé de chiffrement (K1) identifiable par ladite information d'identification (PAR) d'une clé de chiffrement;
- formation d'un paquet de données chiffrées contenant au moins ladite information d'identification (PAR) d'une clé de chiffrement et la partie utile chiffrée (PLK1);
- transmission dudit paquet de données chiffrées à au moins un récepteur.

2. Procédé de transmission d'un contenu selon la revendication 1, **caractérisé en ce que** ladite information d'identification (PAR) d'une clé de chiffrement comprend une information de parité.

3. Procédé de transmission d'un contenu selon la revendication 1, **caractérisé en ce que** ladite information d'identification (PAR) d'une clé de chiffrement comprend un numéro d'ordre dans une liste de clés.

4. Procédé de transmission d'un contenu selon la revendication 1, **caractérisé en ce que** ladite information d'identification (PAR) d'une clé de chiffrement comprend un numéro d'identification de la clé.

5. Procédé de transmission d'un contenu selon la revendication 1, **caractérisé en ce que** ladite information d'identification (PAR) d'une clé de chiffrement a une taille égale à la taille dudit marqueur (Mc).

6. Procédé de transmission d'un contenu selon la revendication 1, **caractérisé en ce qu'**au moins une clé est envoyée audit récepteur sous forme chiffrée dans un message de contrôle (ECM).

7. Procédé de transmission d'un contenu selon la revendication 1, **caractérisé en ce qu'**il comporte les étapes suivantes:
- réception du paquet de données chiffrées;
- extraction de ladite information d'identification (PAR) d'une clé de chiffrement;
- détermination d'une clé à utiliser pour le déchiffrement au moyen de l'information d'identification (PAR) d'une clé de chiffrement;
- déchiffrement de la partie utile chiffrée au moyen de ladite clé à utiliser pour le déchiffrement.

8. Procédé de transmission d'un contenu selon la revendication 7, **caractérisé en ce que**, préalablement au déchiffrement, on forme un paquet de données en remplaçant l'information d'identification (PAR) d'une clé de chiffrement par ledit marqueur (Mc).

9. Procédé de traitement d'un contenu à accès conditionnel, dans lequel ledit contenu est diffusé sous forme de paquets de données chiffrées, ce procédé comportant les étapes suivantes :
- réception d'un paquet de données chiffrées contenant une partie utile chiffrée (PLK1) et au moins une information d'identification (PAR) d'une clé de chiffrement;
- extraction de ladite information d'identification (PAR) d'une clé de chiffrement dudit paquet de données;
- détermination d'une clé à utiliser pour le déchiffrement de ladite partie utile chiffrée, au moyen de l'information d'identification (PAR) d'une clé de chiffrement;
- déchiffrement au moyen de la clé à utiliser, de ladite partie utile chiffrée;
- formation d'un paquet de données (DP) en remplaçant, dans le paquet de données chiffrées, la partie utile chiffrée (PLK1) par la partie utile (PL) et l'information d'identification (PAR) d'une clé de chiffrement par un marqueur de valeur connue;
- traitement dudit paquet de données (DP).
